(19) **Europäisches Patentamt**
**European Patent Office**
**Office européen des brevets**

(11) **EP 4 787 221 A1**

(12) **EUROPEAN PATENT APPLICATION**

(43) Date of publication:
**05.08.2026 Bulletin 2026/32**

(21) Application number: **25224235.9**

(22) Date of filing: **17.12.2025**

(51) International Patent Classification (IPC):
**G06F 40/20** *(2020.01)* **G06F 40/35** *(2020.01)*
**G06Q 30/0201** *(2023.01)* **G06Q 30/02** *(2023.01)*
**G06Q 30/0601** *(2023.01)* **G06Q 30/015** *(2023.01)*

(52) Cooperative Patent Classification (CPC):
**G06Q 30/015; G06F 40/20; G06F 40/216;**
**G06F 40/30; G06F 40/35; G06Q 30/020112;**
**G06Q 30/0281; G06Q 30/0631**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **31.01.2025 JP 2025014859**

(71) Applicant: **Fujitsu Limited**
**Kawasaki-shi, Kanagawa 211-8588 (JP)**

(72) Inventors:
• **GUO, Zhaogong**
**Kawasaki-shi, Kanagawa 211-8588 (JP)**
• **OHNO, Takashi**
**Kawasaki-shi, Kanagawa 211-8588 (JP)**

• **SUGIMOTO, Takanao**
**Kawasaki-shi, Kanagawa 211-8588 (JP)**
• **NISHIGUCHI, Naoki**
**Kawasaki-shi, Kanagawa 211-8588 (JP)**
• **NODA, Masahide**
**Kawasaki-shi, Kanagawa 211-8588 (JP)**
• **KIHARA, Hideto**
**Kawasaki-shi, Kanagawa 211-8588 (JP)**
• **IMAI, Tomoharu**
**Kawasaki-shi, Kanagawa 211-8588 (JP)**
• **KUNIKAWA, Masashi**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **IMPROVEMENT PROPOSAL PRESENTATION METHOD AND IMPROVEMENT PROPOSAL PRESENTATION PROGRAM**

(57) Provided is an improvement proposal presentation method including estimating a dialogue stage for each dialogue of a plurality of dialogues included in a conversation based on the plurality of the dialogues and a first large language model (S4), estimating a final dialogue stage among dialogue stages as a dropout stage of the conversation (S5), and outputting an improvement proposal according to the dropout stage based on a dialogue content of the plurality of the dialogues, the dropout stage, and the first large language model (S7).

**(Cont. next page)**

EP 4 787 221 A1

FIG. 5

```
                    ┌──────────┐
                    │  START   │
                    └────┬─────┘
                         │
                         ▼
                  ╱──────────────╲              S1
              ╱─────────────────────╲
  NO     ◄───│  NEGATIVE FEEDBACK?   │
  │           ╲─────────────────────╱
  │              ╲──────────────╱
  │                     │ YES
  │                     ▼
  │          ┌────────────────────────┐        S2
  │          │ ACQUIRE CONVERSATION LOG│
  │          └───────────┬────────────┘
  │                      │
  │                      ▼
  │          ┌────────────────────────┐        S3
  │          │  DIVIDE CONVERSATION LOG│
  │          └───────────┬────────────┘
  │                      │
  │                      ▼
  │          ┌────────────────────────┐        S4
  │          │ ESTIMATE DIALOGUE STAGE │
  │          │       (1ST LLM)         │
  │          └───────────┬────────────┘
  │                      │
  │                      ▼
  │          ┌────────────────────────┐        S5
  │          │  ESTIMATE DROPOUT STAGE │
  │          │  (ESTIMATION LOGIC #1)  │
  │          └───────────┬────────────┘
  │                      │
  │                      ▼
  │          ┌────────────────────────┐        S6
  │          │  GENERATE IMPROVEMENT   │
  │          │        PROPOSAL         │
  │          └───────────┬────────────┘
  │                      │
  │                      ▼
  │          ┌────────────────────────┐        S7
  │          │   OUTPUT IMPROVEMENT    │
  │          │        PROPOSAL         │
  │          └───────────┬────────────┘
  │                      │
  └──────────────────────┤
                         ▼
                    ┌──────────┐
                    │   END    │
                    └──────────┘
```

## Description

FIELD

A certain aspect of the embodiments described herein relates to an improvement proposal presentation method and an improvement proposal presentation program.

BACKGROUND

There is known a technique for acquiring voice signals of a customer and an operator, converting a conversation content from the voice signals into text, and estimating stages of the operator's response to the customer based on keywords included in a text data. The stages estimated by this technique include, for example, a sales stage, an opening stage, and a closing stage.

There is also known a technique for extracting acoustic characteristics of the customer from a voice signal and analyzing an emotion of the customer from the acoustic characteristics of the customer. This technique detects, for example, a customer complaint state in which the customer is dissatisfied with the operator's response. By feeding back an evaluation of the operator's response to the customer to the operator himself or a supervisor, the customer can be prevented from being in such a complaint state in the future (see, for example, Japanese Patent Application Publication No. 2021-12303).

SUMMARY

The present invention has been made in view of those circumstances, and an object thereof is to provide an improvement proposal presentation method and an improvement proposal presentation program capable of outputting the improvement proposal corresponding to a dropout stage.

According to an aspect of the embodiments, there is provided an improvement proposal presentation method including: estimating a dialogue stage for each dialogue of a plurality of dialogues included in a conversation based on the plurality of the dialogues and a first large language model; estimating a final dialogue stage among dialogue stages as a dropout stage of the conversation; and outputting an improvement proposal according to the dropout stage based on a dialogue content of the plurality of the dialogues, the dropout stage, and the first large language model.

BRIEF DESCRIPTION OF DRAWINGS

FIG. 1 is an example of an improvement proposal presentation system.

FIG. 2 is an example of a hardware configuration of an improvement proposal presentation server.

FIG. 3 is an example of a functional configuration of the improvement proposal presentation server according to a first embodiment.

FIG. 4 is an example of a purchase funnel.

FIG. 5 is a flowchart illustrating an example of an operation of the improvement proposal presentation server according to the first embodiment.

FIG. 6 is an example of a chat screen.

FIG. 7A is an example of a first prompt.

FIG. 7B is a first input example to a first LLM.

FIG. 8A is a first output example from the first LLM.

FIG. 8B is a diagram for explaining an example of a dialogue stage.

FIG. 8C is a diagram for explaining an example of estimation of a dropout stage.

FIG. 9 is an example of a second prompt.

FIG. 10 is a second input example to the first LLM.

FIG. 11 is a second output example from the first LLM.

FIG. 12 is a flowchart illustrating another example of the operation of the improvement proposal presentation server according to the first embodiment.

FIG. 13 is a diagram for explaining an example of a logistic function.

FIG. 14A is a diagram for explaining probabilities before and after the weighting.

FIG. 14B is a diagram for explaining another estimation example of the dropout stage.

FIG. 15 is an example of a functional configuration of an improvement proposal presentation server according to a second embodiment.

FIG. 16 is a flowchart illustrating an example of an operation of the improvement proposal presentation server according to the second embodiment.

FIG. 17A is an example of a training data.

FIG. 17B is an input example to a second LLM.

FIG. 17C is an output example from the second LLM.

FIG. 18 is an example of the CREATE action funnel.

DESCRIPTION OF EMBODIMENTS

In a field of customer service, communication means using large language models, such as a chatbot and an artificial intelligence (AI) agent, are increasing in place of operators from the viewpoint of business efficiency. Such communication means store a large amount of logs of textual conversations, but it is still difficult to extract useful information from the logs to improve the service.

For example, a conversation such as an inquiry may occur between the customer and the chatbot between the time the customer visits an electric commerce (EC) site of a business company that sells a product and the time the customer finally purchases the product. If the chatbot returns a few unsatisfactory responses to the customer's queries, the customer may drop out the EC site prematurely before purchasing the product.

When the customer drops out the EC site before purchasing the product, a purchase rate of the product at the EC site decreases. The purchase rate can be expressed, for example, by a ratio of the number of customers who finally purchased the product to the total number of the customers who visited the EC site. Improving customer service through the chatbot and the AI agent is required to increase the purchase rate. However, it is difficult to output an improvement proposal that leads to an increase in the purchase rate from a large amount of conversation logs.

Hereinafter, embodiments for carrying out the present matter will be described with reference to the drawings.

(First Embodiment)

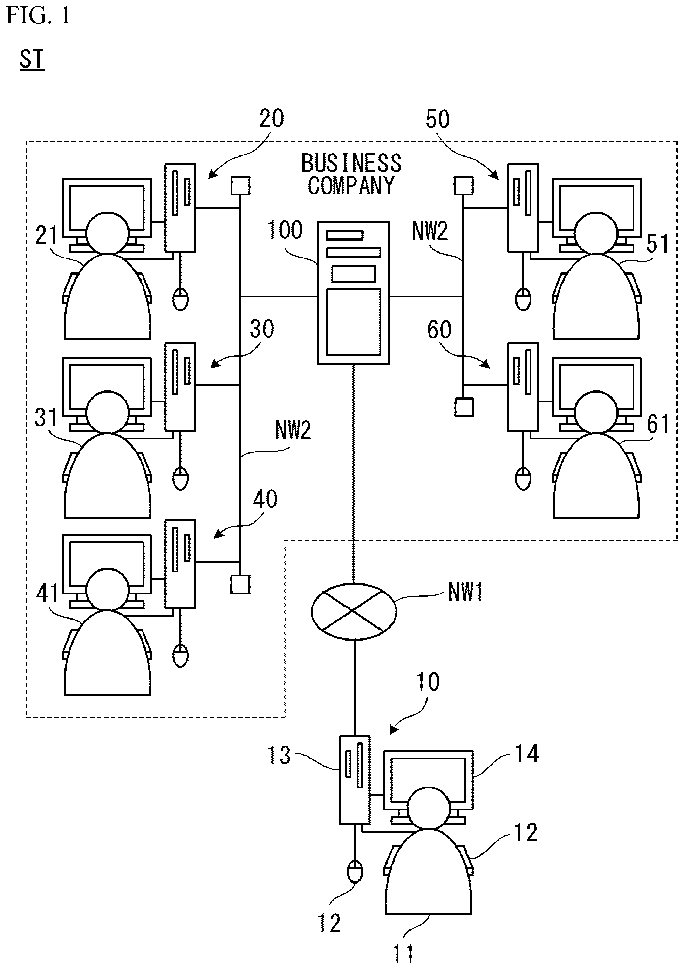

As illustrated in FIG. 1, the improvement proposal presentation system ST is a computer system including terminal devices 10, 20, 30, 40, 50, and 60, and an improvement proposal presentation server 100. At least one of the terminal devices 10, 20, 30, 40, 50, and 60 may be excluded from the improvement proposal presentation system ST.

The terminal device 10 and the improvement proposal presentation server 100 are connected to each other via a communication network NW1. The communication network NW1 includes, for example, the Internet. The communication network NW1 may include a local area network (LAN). The terminal devices 20, 30, 40, 50, and 60 and the improvement proposal presentation server 100 are connected to each other through the communication network NW2. The communication network NW2 includes the LAN. The communication network NW2 may include the Internet.

In FIG. 1, a personal computer (PC) is illustrated as an example of the terminal device 10, but the terminal device 10 is not limited to the PC. The terminal device 10 may be a smart terminal such as a smartphone or a tablet terminal. The terminal devices 20, 30, 40, 50, and 60 have the same configuration as the terminal device 10, and therefore, a detailed description thereof will be omitted.

Although FIG. 1 illustrates a physical server device as an example of the improvement proposal presentation server 100, the improvement proposal presentation server 100 may be a virtual server device. Although one improvement proposal presentation server 100 is illustrated as an example in FIG. 1, a plurality of improvement proposal presentation servers 100 may be provided in the improvement proposal presentation system ST, and various processes executed by the improvement proposal presentation servers 100 may be distributed to the plurality of improvement proposal presentation servers 100.

The terminal device 10 is operated by a user 11. The user 11 is a customer who tries to purchase a product or service at the EC site operated by a business company. The user 11 can access the improvement proposal presentation server 100 by operating an input device 12 provided in the terminal device 10. For example, when the user 11 performs a predetermined operation of inquiring the function of the product by text to the input device 12 in purchasing the product, a control device 13 of the terminal device 10 transmits an instruction corresponding to a predetermined operation to the improvement proposal presentation server 100. Upon receiving the instruction, the improvement proposal presentation server 100 searches for a text answer sentence corresponding to a query sentence (hereinafter referred to as a question sentence) based on the received instruction, and transmits the search result to the control device 13. Upon receiving the search result, the control device 13 displays the search result on a display device 14. Thus, the user 11 can check an answer sentence corresponding to the question sentence.

The terminal devices 20, 30, 40, 50, and 60 are operated by managers 21, 31, 41, 51, and 61 of the EC site, which the managers 21, 31, 41, 51, and 61 belong to the business company. The managers 21, 31, 41, 51, and 61 belong to different business divisions of the business company. For example, the manager 21 belongs to the sales department of the business company. The manager 61 belongs to the support department of the business company. The managers 21, 31, 41, 51, and 61 can implement a necessary measure based on a proposal of an improvement (hereinafter referred to as an improvement proposal) output from the improvement proposal presentation server 100. For example, when the improvement proposal is output from the improvement proposal presentation server 100 to the terminal device 60, the manager 61 can implement a measure such as reviewing an answer as the improvement measure.

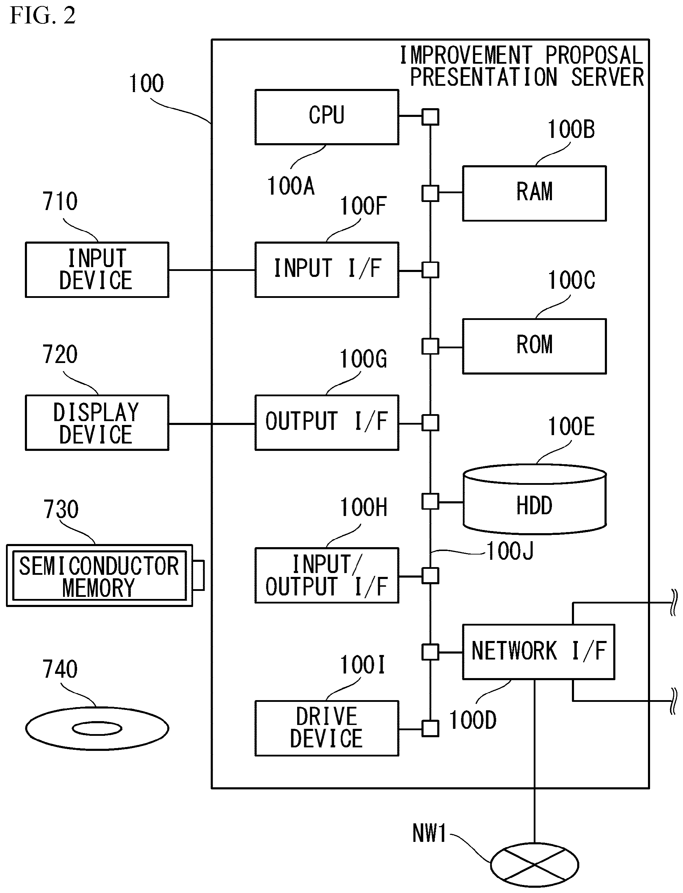

Referring to FIG. 2, the hardware configuration of the improvement proposal presentation server 100 will be described. The terminal devices 10, ..., and 60 described above have basically the same hardware configuration as that of the improvement proposal presentation server 100, and therefore, a detailed description thereof will be omitted.

The improvement proposal presentation server 100 includes a central processing unit (CPU) 100A as a processor, a random-access memory (RAM) 100B and a read only memory (ROM) 100C as memories. The improvement proposal presentation server 100 includes a network interface (I/F) 100D and a hard disk drive (HDD) 100E. Instead of the HDD100E, a solid-state drive (SSD) may be adopted.

The improvement proposal presentation server 100 may include at least one of an input I/F 100F, an output I/F 100G, an input/output I/F 100H, and a drive device 100I as required. The CPU 100A to the drive device 100I are connected to each other by an internal bus 100J. That is, the improvement proposal presentation server 100 can be realized by a computer.

An input device 710 is connected to the input I/F 100F. The input device 710 includes, for example, a keyboard, a mouse, and a touch panel. A display device 720 is connected to the output I/F 100G. The display device 720 is, for example, a liquid crystal display. The input/output I/F 100H is connected to a semiconductor memory 730. The semiconductor memory 730 is, for example, a universal serial bus (USB) memory or a flash memory. The input/output I/F 100H reads a improvement proposal presentation program stored in the semiconductor memory 730. The input I/F 100F and the input/output I/F 100H are provided with, for example, USB ports. The output I/F 100G includes, for example, a display port.

A portable recording medium 740 is inserted into the drive device 100I. The portable recording medium 740 includes, for example, removable disks such as a compact disc (CD) - ROM and a digital versatile disc (DVD). The drive device 100I reads the improvement proposal presentation program recorded in the portable recording medium 740. The network I/F 100D includes, for example, a LAN port and a communication circuit. The communication circuit includes either one or both of a wired communication circuit and a wireless communication circuit. The network I/F 100D is connected to the communication networks NW1 and NW2.

The RAM 100B temporarily stores the improvement proposal presentation program stored in at least one of the ROM 100C, the HDD 100E, and the semiconductor memory 730 by the CPU 100A. The RAM 100B temporarily stores the improvement proposal presentation program recorded in the portable recording medium 740 by the CPU 100A. The CPU 100A executes the stored improvement proposal presentation program to realize various functions described later and to execute an improvement proposal presentation method including various processes described later. The improvement proposal presentation program may be one corresponding to a flowchart described later.

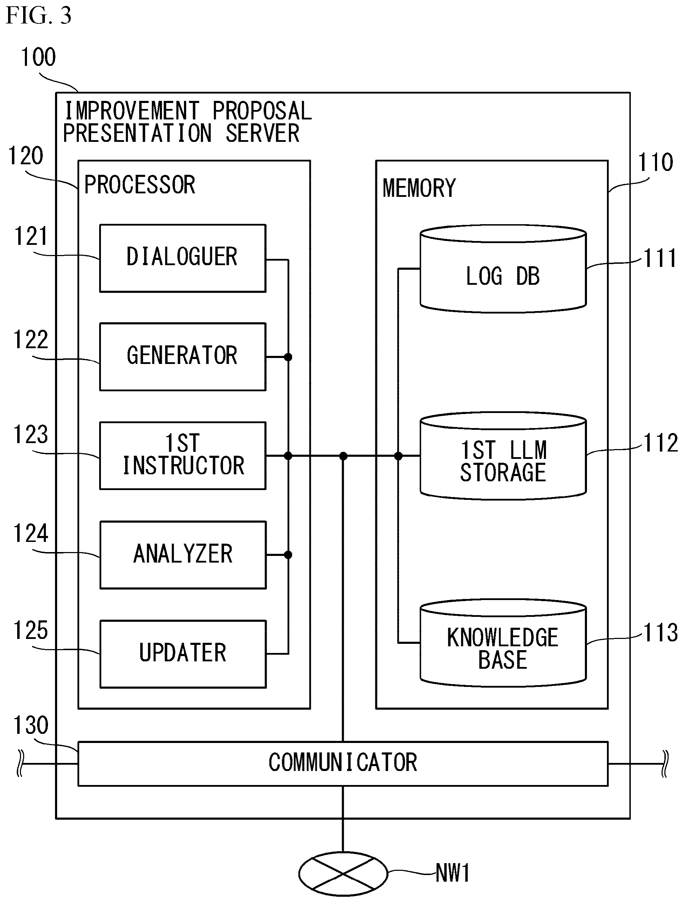

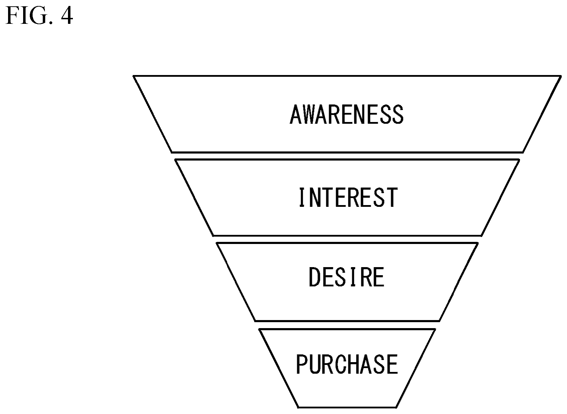

Referring to FIGS. 3 and 4, the functional configuration of the improvement proposal presentation server 100 will be described. FIG. 3 illustrates a main part of the function of the improvement proposal presentation server 100.

As illustrated in FIG. 3, the improvement proposal presentation server 100 includes a memory 110, a processor 120, and a communicator 130. The memory 110 can be implemented by either or both of the RAM 100B and the HDD 100E described above. The processor 120 can be implemented by the CPU 100A described above. The communicator 130 can be implemented by the network I/F 100D described above.

The memory 110, the processor 120, and the communicator 130 are connected to each other. The memory 110 includes a log database (DB) 111, a first LLM storage 112, and a knowledge base 113. The processor 120 includes a dialoguer 121, a generator 122, a first instructor 123, an analyzer 124, and an updater 125. The processor 120 executes various processes in cooperation with the memory 110. The first LLM storage 112, the knowledge base 113, the dialoguer 121, and the first instructor 123 realize a generative AI system with retrieval-augmented generation (RAG).

The dialoguer 121 receives the instruction transmitted from the terminal device 10 via the communicator 130. As described above, when the user 11 performs the predetermined operation for inquiring about the function of the product, the dialoguer 121 receives an instruction corresponding to the predetermined operation. Upon receiving the instruction, the dialoguer 121 accesses the knowledge base 113 to search for an answer sentence corresponding to the question sentence of the function of the product. When the dialoguer 121 finds the answer sentence most suitable for the inquiry about the function of the product, the dialoguer 121 acquires the answer sentence as a search result from the knowledge base 113. When the dialoguer 121 acquires the search result, the dialoguer 121 transmits the search result to the terminal device 10 via the communicator 130. The dialoguer 121 can be implemented by, for example, an AI chatbot, an AI agent embedded in the EC site or a generative pre-trained transformers (GPTs) which are plug-in functions of the Chat GPT.

The generator 122 accesses the dialoguer 121 to acquire a series of conversations including the question sentence and the answer sentence together with the feedback of the user 11. When the conversation is acquired, the generator 122 generates a log of the conversation and stores the log as data in the log DB 111 together with the feedback. Thus, the log DB 111 stores the conversation log in association with the feedback.

The first instructor 123 instructs the first LLM storage 112 to perform various estimation processes. The first LLM storage 112 stores a first large language model (LLM). The first LLM is an open-source natural-language-processing AI model, such as Llama3. The first instructor 123 can acquire one set of the question sentence and the answer sentence from the dialoguer 121. When the first instructor 123 acquires one set of the question sentence and the answer sentence, the first instructor 123 instructs the first LLM storage 112 to perform an estimation process for estimating a dialogue stage of one set of the question sentence and the answer sentence. In addition, as will be described in detail later, the first instructor 123 can instruct an estimation process for estimating a dropout stage from among a plurality of interaction stages and an estimation process for estimating an improvement proposal for the managers 21, ..., and 61. The first instructor 123 can be implemented by, for example, an application programming interface (API) compatible with the Open AI. When a closed natural language processing AI model such as the GPT 4. 0 is used, the first instructor 123 and the first LLM storage 112 are implemented outside the improvement proposal presentation server 100. In this case, the first instructor 123 can be implemented by, for example, the OpenAI API, and the first LLM storage 112 can be implemented by, for example, the GPT 4. 0.

The analyzer 124 acquires the log of the conversation from the generator 122 and executes a funnel analysis. The funnel analysis is a method of visualizing the process of the user 11 as a customer until the user 11 purchases the product or service for each stage (stage or phase) and analyzing the dropout rate and the result at each stage. In the funnel analysis, as illustrated in FIG. 4, the purchase funnel, which is an example of the purchasing behavior model of consumers, is used. When the analyzer 124 acquires the log of the conversation, the analyzer 124 divides the log of the conversation into one question-and-answer dialogues and requests the first instructor 123 to estimate the dialogue stage of each dialogue. Thus, the first instructor 123 instructs the first LLM storage 112 to perform an estimation process for estimating the dialogue stage.

When the analyzer 124 acquires the dialogue stage from the first instructor 123, the analyzer 124 estimates a last dialogue stage as the dropout stage and requests the first instructor 123 to estimate the improvement proposal corresponding to the dropout stage. The last dialogue stage is an example of a final dialogue stage. Accordingly, the first instructor 123 instructs the first LLM storage 112 to perform an estimation process for estimating an improvement proposal corresponding to the dropout stage. When the analyzer 124 acquires the improvement proposal from the first instructor 123, the analyzer 124 outputs the improvement proposal to one of the display devices of the terminal devices 20, 30, 40, 50, and 60. Thus, for example, the manager 61 operating the terminal device 60 can confirm the improvement proposal through the display device of the terminal device 60.

The updater 125 updates the knowledge base 113 based on an instruction from the terminal device 60. The knowledge base 113 stores various assumed question sentences and various answer sentences corresponding to the assumed question sentences as data. That is, the knowledge base 113 stores the assumed question and answer collection as the data. The answer sentence includes a uniform resource locator (URL) that indicates where the company's internal information and operating manuals are stored. The updater 125 updates the question sentences and the answer sentences, the company's internal information, the operation manual, and the like based on the instruction from the terminal device 60. Thus, the answer sentence presented from the dialoguer 121 to the user 11 is improved.

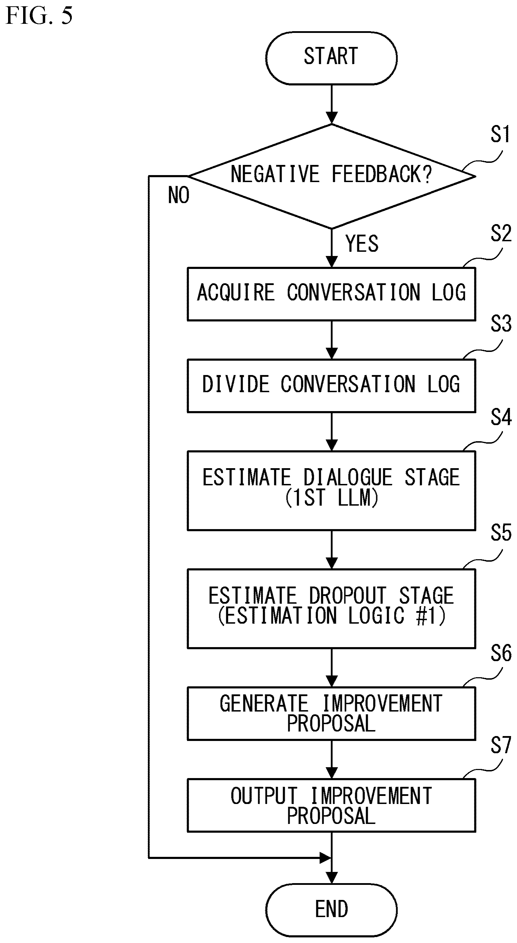

Next, referring to FIGS. 5 to 11, the operation of the improvement proposal presentation server 100 will be described.

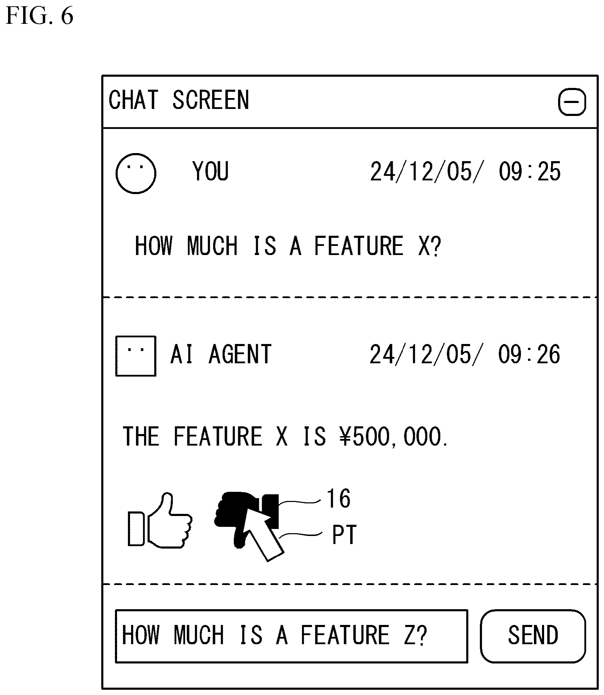

First, as illustrated in FIG. 5, the generator 122 determines whether or not negative feedback is detected (step S1). As described above, the generator 122 can access the dialoguer 121 and acquire a series of conversations including a question sentence and an answer sentence together with the feedback of the user 11. For example, as illustrated in FIG. 6, when a thumb down image 16 is pressed by the mouse pointer PT on the chat screen, the generator 122 can acquire negative feedback as the feedback of the user 11. In this way, when the negative feedback is acquired, the generator 122 detects the negative feedback.

Although the thumb down image 16 will be described as an example of the negative feedback, the generator 122 may detect the negative feedback by, for example, the number of inverted star images whose colors can be inverted. Although not illustrated, a comment sentence input in a feedback input field provided on the chat screen may be analyzed by using it for negative/positive determination, and the negative feedback may be detected based on the analysis result.

If the negative feedback is not detected (step S1: NO), the improvement proposal presentation server 100 ends the process. On the other hand, when the negative feedback is detected (step S1: YES), the analyzer 124 acquires the log of the conversation (step S2). That is, the analyzer 124 acquires the log of the conversation from the generator 122 in response to the negative feedback. In a case where the negative feedback is not used as a trigger, periodic execution may be used as a trigger, for example, once a day or once a week.

When the log of the conversation is acquired, the analyzer 124 divides the log of the conversation (step S3). More specifically, the analyzer 124 divides the log of the conversation into a question-and-answer format. As will be described in detail later, the analyzer 124 can generate a plurality of conversation files each of which includes one question sentence and one answer sentence as a set by dividing the log of the conversation.

After the log of the conversation is divided, the analyzer 124 estimates the dialogue stage by using the first LLM (step S4). More specifically, the analyzer 124 outputs a plurality of dialogue files and a first prompt file describing the processing contents for the dialogue files to the first instructor 123, and requests the first instructor 123 to estimate the dialogue stage. The first instructor 123 can input the plurality of dialog files and the first prompt file to the first LLM. The plurality of dialogue files and the first prompt file are input to the first LLM, and the estimation result is output from the first LLM to the first instructor 123.

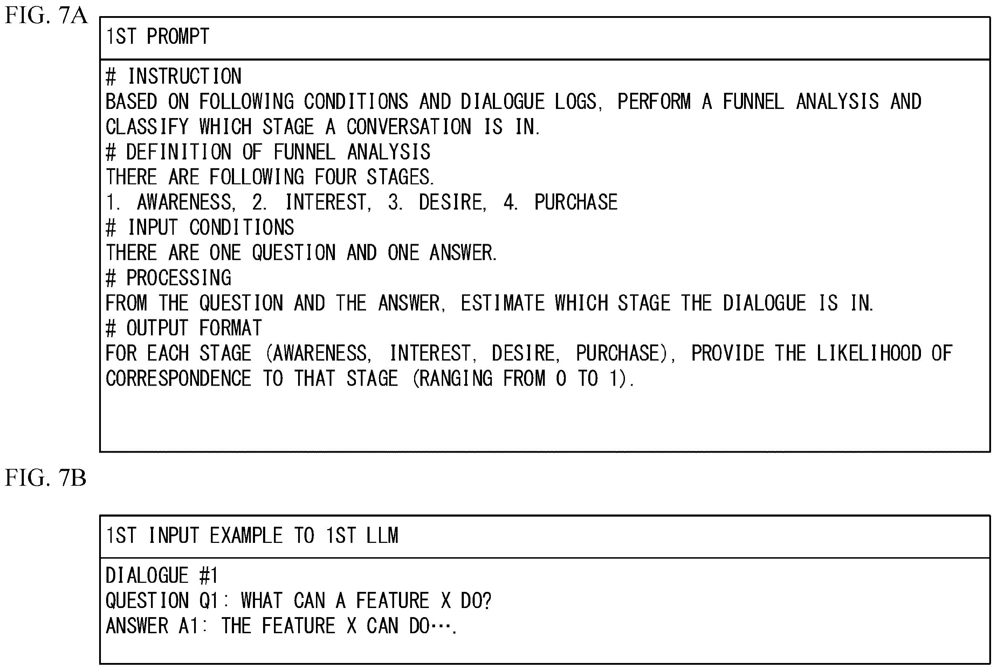

Here, the first prompt file is a file representing instructions for the first LLM, and includes, for example, an instruction item, a definition of the funnel analysis, input conditions, processing contents, and an output format, as illustrated in FIG. 7A. Although not illustrated, a specific function of the Open AI such as the Structured Outputs may be specified as the output format to suppress unnecessary output other than a label and a probability described later. The first dialogue file belonging to the plurality of dialogue files includes one question sentence and one answer sentence as a set, as illustrated in FIG. 7B. The first dialog file may or may not include the first dialog number "dialog #1".

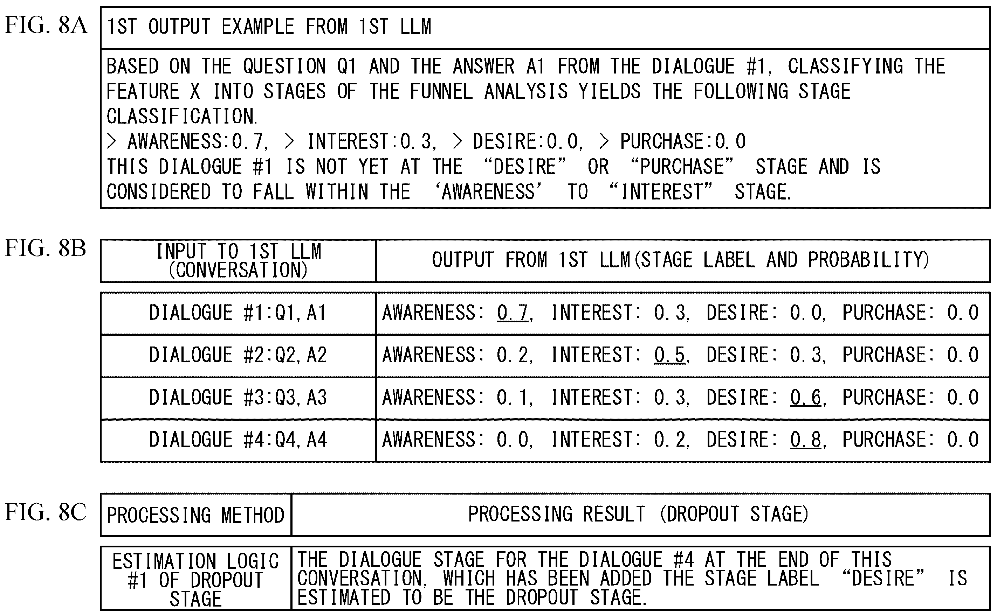

When the first dialog file and the first prompt file are input to the first LLM, a first estimation result file as a first output example is output from the first LLM to the first instructor 123 as illustrated in FIG. 8A. The first estimation result file includes a dialogue stage to which a stage label "awareness" or the like based on the definition of the funnel analysis (see FIG. 7A) is added, a probability "0. 7" corresponding to the dialogue stage, a description about the estimation result, and the like. That is, the first LLM estimates the dialogue stage of the first dialogue file based on the first dialogue file and the first prompt file, and adds any stage label based on the definition of the funnel analysis to the estimated dialogue stage.

The first instructor 123 can individually input the remaining dialogue files other than the first dialogue file included in the plurality of dialogue files to the first LLM. Therefore, the first instructor 123 similarly outputs the estimation result file corresponding to the remaining dialogue file from the first LLM. Thus, as illustrated in FIG. 8B, the first instructor 123 can acquire the estimation result file for each of the remaining dialogue files in the same manner as the first estimation result file. When the first instructor 123 acquires all the estimation result files including the first estimation result file, the first instructor outputs all the estimation result files to the analyzer 124. In this way, the analyzer 124 estimates the dialogue stage by acquiring the estimation result file.

After estimating the dialogue stage, the analyzer 124 estimates the dropout stage based on a estimation logic #1 of the dropout stage as illustrated in FIG. 5 (step S5). The estimation logic #1 is a method for estimating the last dialogue stage of the dialogue from which the user 11 left as the dropout stage. Therefore, in the present embodiment, as illustrated in FIG. 8C, the analyzer 124 estimates the dialogue stage of the last dialogue #4 to which the stage label "desire" is added as the dropout stage. Therefore, the stage label "desire" is added to the dropout stage as the dropout stage label.

When the dropout stage is estimated, the analyzer 124 generates the improvement proposal as illustrated in FIG. 5 (step S6). More specifically, the analyzer 124 outputs a second dialogue file including a plurality of dialogues to which stage labels are respectively added and a second prompt file describing a responsible department of the improvement proposal to the first instructor 123, and requests the first instructor 123 to generate the improvement proposal. The first instructor 123 can input the second dialog file and the second prompt file to the first LLM. The second dialog file and the second prompt file are input to the first LLM, and the estimation result is output from the first LLM to the first instructor 123.

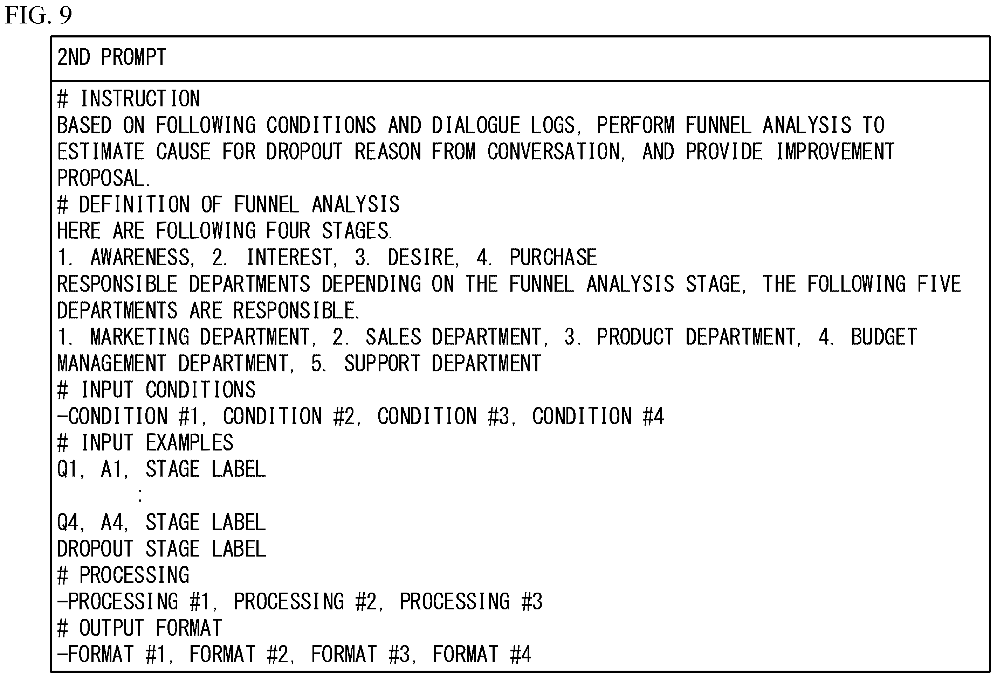

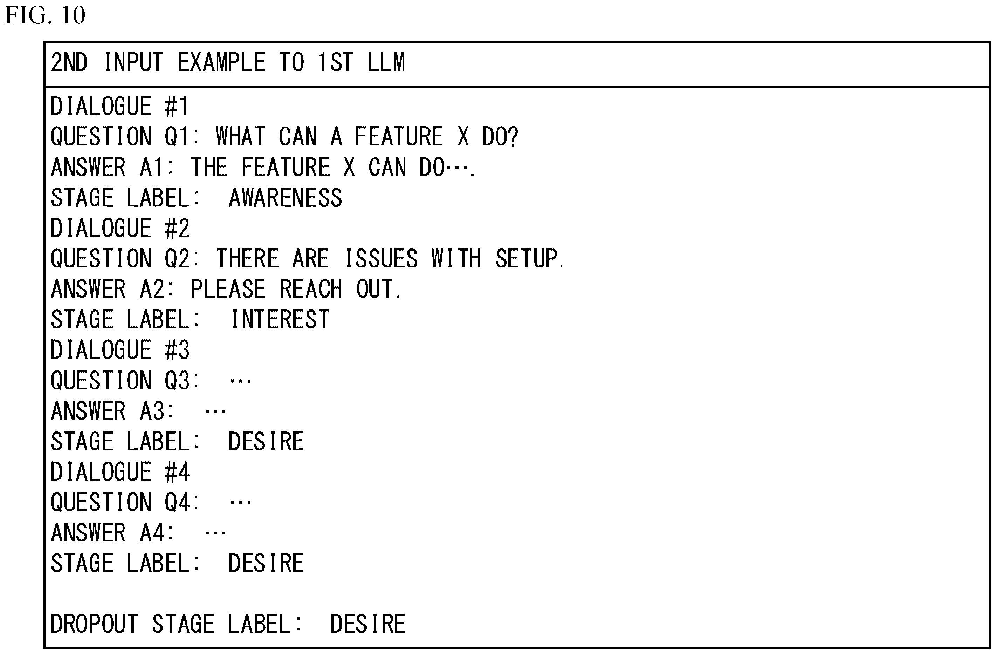

Here, the second prompt file is a file representing a command for the first LLM, and includes, for example, an instruction item, a definition of the funnel analysis, responsible departments, input conditions, input examples, processing contents, and an output format, as illustrated in FIG. 9. The second dialogue file includes, as illustrated in FIG. 10, a plurality of dialogues #1, ..., and #4 to which the stage labels are respectively added, and the dropout stage label.

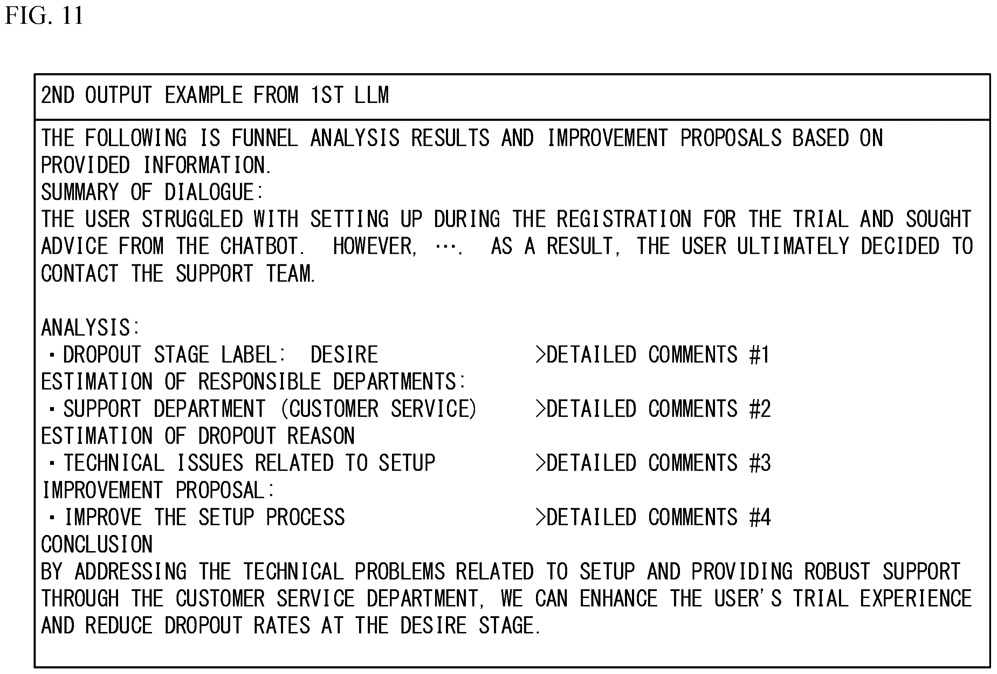

When the second dialog file and the second prompt file are input to the first LLM, a second estimation result file as a second output example is output from the first LLM to the first instructor 123 as illustrated in FIG. 11. The second estimation result file includes the responsible department, the estimated reason for the dropout, the improvement proposal, and the detailed comments on each. That is, the first LLM estimates a dropout reason from the conversation, generates the improvement proposal for suppressing the dropout, and estimates the responsible department of the generated improvement proposal based on the second dialogue file and the second prompt file. When the first instructor 123 acquires the second estimation result file, the first instructor outputs the second estimation result file to the analyzer 124. In this way, the analyzer 124 generates the improvement proposal by acquiring the second estimation result file.

When the analyzer 124 generates the improvement proposal, the analyzer 124 outputs the improvement proposal as illustrated in FIG. 5 (step S7). For example, the analyzer 124 outputs the improvement proposal to the terminal device 60 based on the responsible department included in the second estimation result file. Thus, the manager 61 belonging to the support department can confirm the improvement proposal displayed on the terminal device 60. When the manager 61 performs a predetermined operation according to the improvement proposal on the terminal device 60, the terminal device 60 can generate an instruction according to the predetermined operation and output it to the updater 125.

As described above, according to the present embodiment, the improvement proposal corresponding to the dropout stage is output. Therefore, if the manager 61 updates the knowledge base 113 according to the improvement proposal, the accuracy of the answer of the improvement proposal presentation server 100 is improved, and even if the user 11 has a similar dissatisfaction in the future, the improvement proposal presentation server 100 can provide a more effective response to the user 11. As a result, there is a high probability that a conversion rate, such as the purchase rate of the product and the service, will improve.

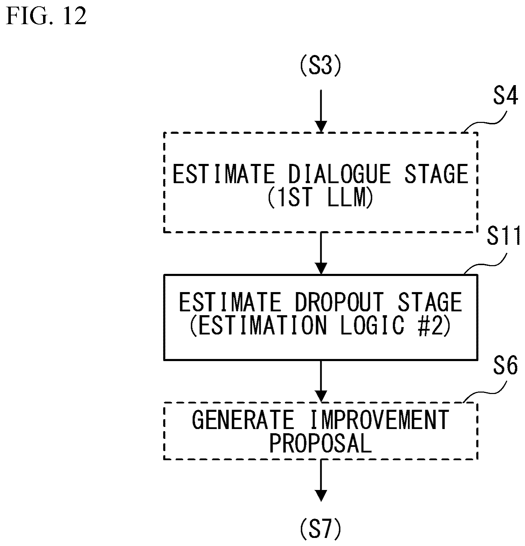

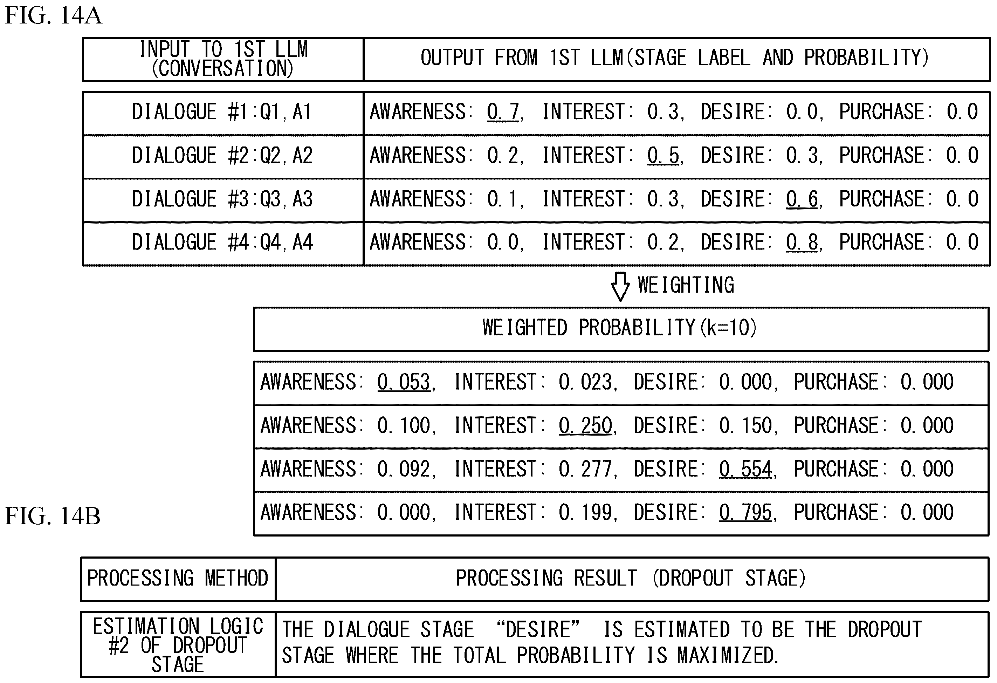

Next, referring to FIGS. 12 to 14B, a modification example of the first embodiment will be described. In FIG. 12, the same processing as that described with reference to FIG. 5 is denoted by the same reference numerals, and a detailed description thereof will be omitted. In FIG. 12, a part of the processing described with reference to FIG. 5 is omitted. The same applies to the flowchart described later.

In the above embodiment, the analyzer 124 estimates the dropout stage based on the estimation logic #1 of the dropout stage, but the analyzer 124 may estimate the dropout stage based on an estimation logic #2 of the dropout stage. Specifically, as illustrated in FIG. 12, after the execution of the process of the above-described step S4, the analyzer 124 may estimate the dropout stage based on the estimation logic #2 of the dropout stage (step S11), and then execute the process of step S6. The estimation logic #2 is a method of estimating a dialogue stage, which totals probabilities to which weights are given and has a maximum total of probabilities, as the dropout stage. The dialogue stage at which the total of probabilities is maximized is an example of a specific dialogue stage.

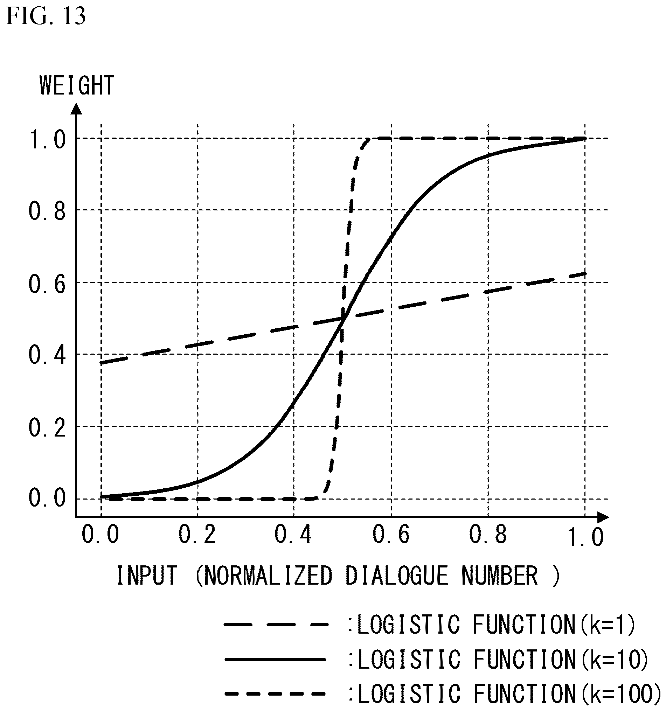

More specifically, the analyzer 124 specifies a weight to be given to the probability based on a following formula (1) in which the logistic function is applied. Where the $\sigma(x)$ represents a sigmoid function. The i represents a current dialogue number. The n represents a total number of dialogues. The k is a variable that adjusts the steepness of the curve of the logistic function. As illustrated in FIG. 13, the degree of curvature of the curve of the logistic function changes according to the value of the k. Thereby, the progress of the dialogue is expressed by the increase of the dialogue number, and the larger the dialogue number, the larger the weight is specified. That is, as the dialogue progresses, the dialogue number representing a progress degree of the dialogue progress increases, and a large weight is specified. In other words, the sooner the dialogue starts, the smaller the weight is specified.

[Formula (1)]

$$\omega_i = \sigma\left(k\left(\frac{i}{n} - 0.5\right)\right)$$

When the weight is specified, the analyzer 124 gives the specified weight to the probability. For example, as illustrated in FIG. 14A, when the weight is specified based on the logistic function of k=10, the analyzer 124 multiplies each probability corresponding to the dialogue stage by the weight to give the weight, and calculates a new probability as a weighted probability. After calculating the new probability, the analyzer 124 totals the new probabilities for each dialogue stage and estimates the dialogue stage at which the total probability becomes the maximum as the dropout stage, as illustrated in FIG. 14B.

In the purchase funnel (see FIG. 4), a purchase action assuming a flow in one direction from the top to the bottom is assumed, but the user 11 may end the dialogue with a flow in the opposite direction from the bottom to the top. Therefore, by estimating the dropout stage using the respective probabilities of the entire dialogue while attaching importance to the last dialogue stage, the analyzer 124 can estimate the dropout stage with high accuracy. As described above, by using the weights specified based on the formula to which the logistic function is applied, it is highly possible that the estimation accuracy of the dropout stage is improved.

(Second Embodiment)

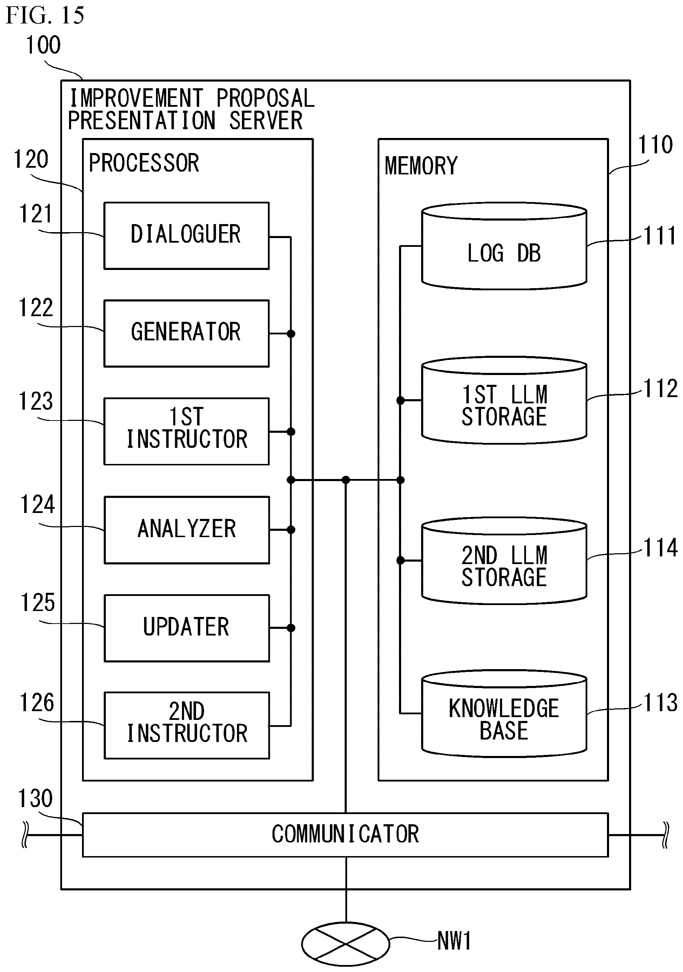

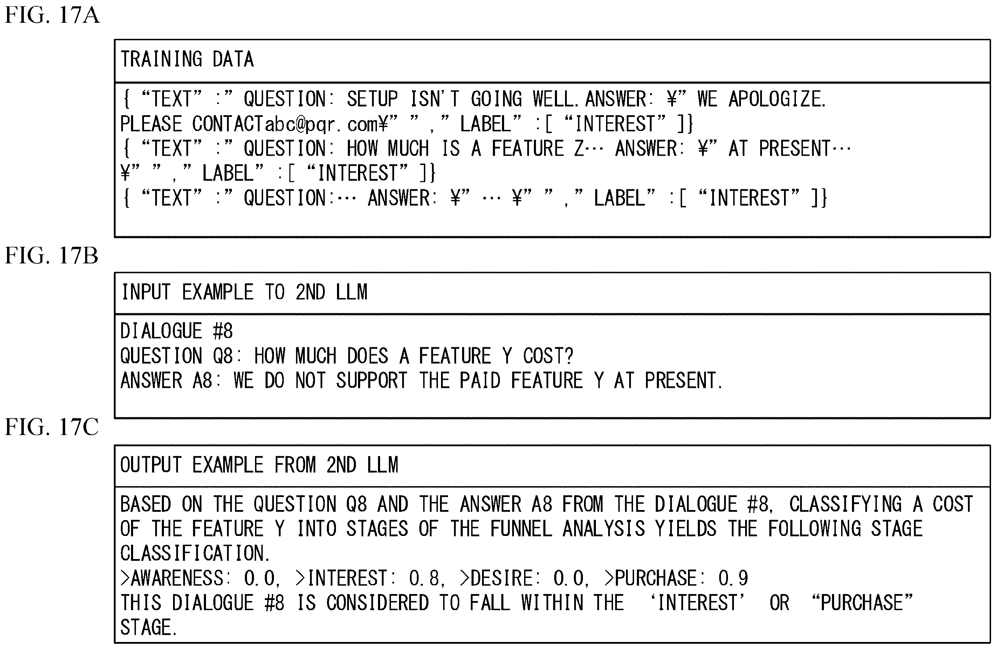

Referring to FIGS. 15 to 17C, a second embodiment of the present matter will be described. In FIG. 15, the same components as those described with reference to FIG. 3 are denoted by the same reference numerals, and detailed description thereof will be omitted. In the second embodiment, the following description will be given on the estimation of the dropout stage using a machine learning instead of the estimation of the dropout stage using the weights described above.

First, as illustrated in FIG. 15, the improvement proposal presentation server 100 according to the second embodiment differs from the improvement proposal presentation server 100 according to the first embodiment in that the memory 110 includes a second LLM storage 114 and the processor 120 includes a second instructor 126.

The second LLM storage 114 stores the second LLM. The second LLM is a large language model that has been trained by machine learning of the training data. The training data includes a plurality of question sentences, answer sentences corresponding to the plurality of question sentences, and stage labels for sets of the question sentences and the answer sentences, as illustrated in FIG. 17A. The second LLM learns this training data by a classification algorithm such as a logistic regression, a support vector machine (SVM), or a random forest. The second LLM storage 114 stores the large language model, which has been learned by performing the machine learning on such training data in advance, as the second LLM.

The second instructor 126 instructs the second LLM storage 114 to perform a specific estimation process. The second instructor 126 can acquire one set of the question sentence and the answer sentence from the analyzer 124. In other words, the second instructor 126 may acquire one set of the question sentence and the answer sentence from the dialoguer 121 via the analyzer 124. When the second instructor 126 acquires one set of the question sentence and the answer sentence, the second instructor 126 instructs the second LLM storage 114 to perform an estimation process for estimating the dialogue stage of one set of the question sentence and the answer sentence. The second instructor 126 can be realized as a natural language processing AI model for categorization or as a categorization API. When a closed natural language processing AI model for classification such as the Cohere's Classify API is used, the second instructor 126 and the second LLM storage 114 are implemented outside the improvement proposal presenting server 100. In this case, the second instructor 126 and the second LLM storage 114 can be realized by, for example, the Classify API in which the question sentence and the answer sentence are learned as the training data.

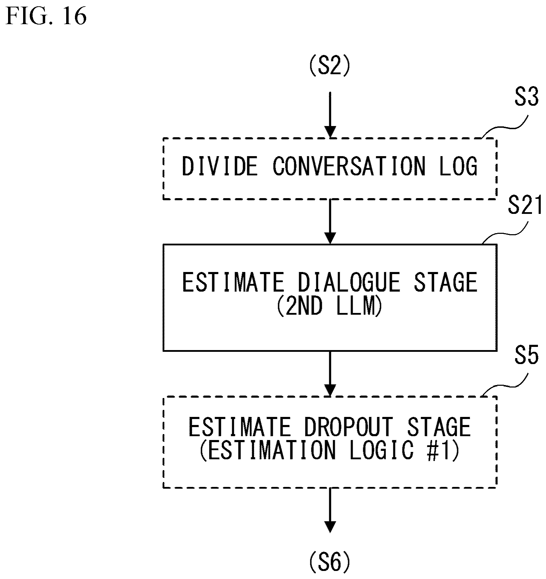

As illustrated in FIG. 16, after the execution of the process of the above-described step S3, the analyzer 124 estimates the dialogue stage by using the second LLM (step S21), and then can execute the process of step S5. More specifically, the analyzer 124 outputs a plurality of dialogue files to the second instructor 126 and requests the second instructor 126 to estimate the dialogue stage. For example, a third dialog file belonging to the plurality of dialog files includes one question sentence and one answer sentence as a set, as illustrated in FIG. 17B. The third dialog file may or may not include, for example, a eighth dialog number "dialog #8". The output of the first prompt file (see FIG. 7A) described in the first embodiment to the second instructor 126 is unnecessary.

The second instructor 126 can input a plurality of dialogue files to the second LLM. When the plurality of dialogue files are input to the second LLM, the second LLM outputs the estimation result to the second instructor 126. When such a fourth dialog file is input to the second LLM, a third estimation result file as an output example is output from the second LLM to the second instructor 126 as illustrated in FIG. 17C.

The third estimation result file includes a dialogue stage to which a stage label "interest" or the like based on the learned large language model is added, a probability "0. 8" corresponding to the dialogue stage, a description about the estimation result, and the like. That is, the second LLM estimates the dialogue stage of the third dialogue file based on the third dialogue file, and adds any stage label to the estimated dialogue stage. In this way, the second LLM can add the stage label without utilizing the first prompt file. As described above, according to the second embodiment, the use of the second LLM improves the addition accuracy of the stage label, and therefore, the possibility of improving an estimation accuracy of the dropout stage is high.

(Third Embodiment)

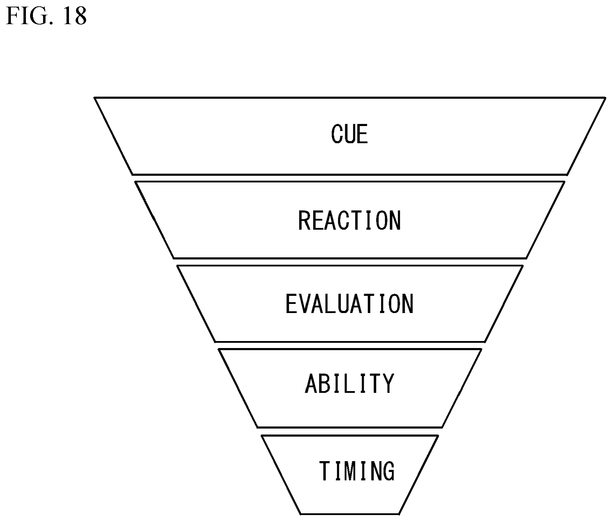

Next, referring to FIG. 18, a third embodiment of the present matter will be described. In the first and second embodiments, the analyzer 124 uses a marketing funnel such as the purchase funnel when executing the funnel analysis. However, the analyzer 124 may perform the funnel analysis using the marketing funnel other than the purchase funnel.

For example, as illustrated in FIG. 18, the analyzer 124 may perform the funnel analysis using a CREATE action funnel, which is an example of a marketing funnel. The CREATE action funnel is a consumer behavior model that combines psychology and behavioral economics. The CREATE action funnel is divided into five stages: cue, reaction, evaluation, ability, and timing.

The cue represents a stage of whether or not a person has noticed an experience site where the user can experience the technology, for example. If the person doesn't notice the experience site, the person will drop out the CREATE action funnel without moving to the just below stage. The reaction represents whether or not the person has a negative reaction to the experience site. If the response is negative, the person does not move to the just below stage and drops out the CREATE action funnel. The evaluation represents, for example, the cost-effectiveness of the introduction of the technology. If the costs outweigh the benefits, the person can drop out the CREATE action funnel without moving to the just below stage.

The ability represents, for example, whether or not the introduction of the technology can be realized. If the introduction of the technology cannot be realized, the dropout from the CREATE action funnel is established without moving to the just below stage. The timing represents, for example, whether the technology can be introduced now. If the technology cannot be introduced now, the dropout from the CREATE action funnel is established without moving to the just below stage. Such a CREATE action funnel may be used instead of the purchase funnel.

Although the exemplary embodiments of the present invention have been illustrated in detail, the present invention is not limited to the above-mentioned embodiments, and other embodiments, variations and modifications may be made without departing from the scope of the present invention. For example, although the EC site and the experience site are described as examples in the above embodiment, the present invention may be applied to a product introduction for accepting a request for an estimate, a company introduction for accepting a request for information materials, and an inquiry at a site providing an information technology (IT) service.

**Claims**

1. An improvement proposal presentation method comprising:

   estimating a dialogue stage for each dialogue of a plurality of dialogues included in a conversation based on the plurality of the dialogues and a first large language model (S4);
   estimating a final dialogue stage among dialogue stages as a dropout stage of the conversation (S5); and
   outputting an improvement proposal according to the dropout stage based on a dialogue content of the plurality of the dialogues, the dropout stage, and the first large language model (S7).

2. The improvement proposal presentation method according to claim 1, wherein the estimating the final dialogue stage includes

   calculating a first probability representing an estimation accuracy of the dialogue stage,
   specifying a weight corresponding to a dialogue progress of the plurality of the dialogues based on a logistic function, and
   estimating the dropout stage based on a second probability after the weight is given to the first probability.

3. The improvement proposal presentation method according to claim 2, wherein the estimating the final dialogue stage includes

   calculating a total probability obtained by totaling the second probability for each of the dialogue stages, and
   estimating a specific dialogue stage at which the total probability is maximized as the dropout stage.

4. The improvement proposal presentation method according to claim 2, wherein
   the logistic function is a function for calculating the weight based on a dialogue number representing a progress degree of the dialogue progress, a total number of the plurality of the dialogues, a sigmoid function, and a variable for adjusting a steepness of the sigmoid function.

5. The improvement proposal presentation method according to claim 1 or 2, wherein the estimating the dialogue stage includes
   estimating a dialogue stage for each dialogue of the plurality of the dialogues based on a second large language model obtained by performing a machine learning on a relationship between the plurality of the dialogues and the dialogue stage corresponding to the plurality of the dialogues (S21), instead of the first large language model.

6. The improvement proposal presentation method according to claim 1 or 2, wherein
   the dialogue stage is a stage or phase defined in a funnel analysis that analyzes a behavioral model of a consumer.

7. The improvement proposal presentation method according to claim 1 or 2, wherein the outputting includes
   outputting the improvement proposal to a terminal device (60).

8. An improvement proposal presentation program that causes a computer to execute a process, the process comprising:

   estimating a dialogue stage for each dialogue of a plurality of dialogues included in a conversation based on the plurality of the dialogues and a first large language model (S4);
   estimating a final dialogue stage among dialogue stages as a dropout stage of the conversation (S5); and
   outputting an improvement proposal according to the dropout stage based on a dialogue content of the plurality of the dialogues, the dropout stage, and the first large language model (S7).

FIG. 1

<u>ST</u>

FIG. 2

FIG. 3

FIG. 4

FIG. 5

```
                    ┌─────────────┐
                    │    START    │
                    └─────────────┘
                           │
                           ▼                    S1
              ╱─────────────────────────╲
        NO   ╱    NEGATIVE FEEDBACK?      ╲
      ┌─────╲                            ╱
      │       ╲─────────────────────────╱
      │                    │ YES              S2
      │                    ▼
      │        ┌───────────────────────────┐
      │        │  ACQUIRE CONVERSATION LOG │
      │        └───────────────────────────┘
      │                    │                  S3
      │                    ▼
      │        ┌───────────────────────────┐
      │        │  DIVIDE CONVERSATION LOG  │
      │        └───────────────────────────┘
      │                    │                  S4
      │                    ▼
      │        ┌───────────────────────────┐
      │        │  ESTIMATE DIALOGUE STAGE  │
      │        │        (1ST LLM)          │
      │        └───────────────────────────┘
      │                    │                  S5
      │                    ▼
      │        ┌───────────────────────────┐
      │        │  ESTIMATE DROPOUT STAGE   │
      │        │   (ESTIMATION LOGIC #1)   │
      │        └───────────────────────────┘
      │                    │                  S6
      │                    ▼
      │        ┌───────────────────────────┐
      │        │   GENERATE IMPROVEMENT    │
      │        │        PROPOSAL           │
      │        └───────────────────────────┘
      │                    │                  S7
      │                    ▼
      │        ┌───────────────────────────┐
      │        │   OUTPUT IMPROVEMENT      │
      │        │        PROPOSAL           │
      │        └───────────────────────────┘
      │                    │
      └────────────────────┤
                           ▼
                    ┌─────────────┐
                    │     END     │
                    └─────────────┘
```

FIG. 6

CHAT SCREEN ⊖

☺ YOU 24/12/05/ 09:25

HOW MUCH IS A FEATURE X?

▫ AI AGENT 24/12/05/ 09:26

THE FEATURE X IS ¥500,000.

👍 👎 —16
—PT

HOW MUCH IS A FEATURE Z? | SEND

FIG. 7A

| 1ST PROMPT |
| --- |
| # INSTRUCTION<br>BASED ON FOLLOWING CONDITIONS AND DIALOGUE LOGS, PERFORM A FUNNEL ANALYSIS AND CLASSIFY WHICH STAGE A CONVERSATION IS IN.<br># DEFINITION OF FUNNEL ANALYSIS<br>THERE ARE FOLLOWING FOUR STAGES.<br>1. AWARENESS, 2. INTEREST, 3. DESIRE, 4. PURCHASE<br># INPUT CONDITIONS<br>THERE ARE ONE QUESTION AND ONE ANSWER.<br># PROCESSING<br>FROM THE QUESTION AND THE ANSWER, ESTIMATE WHICH STAGE THE DIALOGUE IS IN.<br># OUTPUT FORMAT<br>FOR EACH STAGE (AWARENESS, INTEREST, DESIRE, PURCHASE), PROVIDE THE LIKELIHOOD OF CORRESPONDENCE TO THAT STAGE (RANGING FROM 0 TO 1). |

FIG. 7B

| 1ST INPUT EXAMPLE TO 1ST LLM |
| --- |
| DIALOGUE #1<br>QUESTION Q1: WHAT CAN A FEATURE X DO?<br>ANSWER A1: THE FEATURE X CAN DO···. |

EP 4 787 221 A1

**FIG. 8A**

| 1ST OUTPUT EXAMPLE FROM 1ST LLM |
|---|
| BASED ON THE QUESTION Q1 AND THE ANSWER A1 FROM THE DIALOGUE #1, CLASSIFYING THE FEATURE X INTO STAGES OF THE FUNNEL ANALYSIS YIELDS THE FOLLOWING STAGE CLASSIFICATION.<br>> AWARENESS:0.7, > INTEREST:0.3, > DESIRE:0.0, > PURCHASE:0.0<br>THIS DIALOGUE #1 IS NOT YET AT THE "DESIRE" OR "PURCHASE" STAGE AND IS CONSIDERED TO FALL WITHIN THE 'AWARENESS' TO "INTEREST" STAGE. |

**FIG. 8B**

| INPUT TO 1ST LLM (CONVERSATION) | OUTPUT FROM 1ST LLM (STAGE LABEL AND PROBABILITY) |
|---|---|
| DIALOGUE #1:Q1, A1 | AWARENESS: <u>0.7</u>, INTEREST: 0.3, DESIRE: 0.0, PURCHASE: 0.0 |
| DIALOGUE #2:Q2, A2 | AWARENESS: 0.2, INTEREST: <u>0.5</u>, DESIRE: 0.3, PURCHASE: 0.0 |
| DIALOGUE #3:Q3, A3 | AWARENESS: 0.1, INTEREST: 0.3, DESIRE: <u>0.6</u>, PURCHASE: 0.0 |
| DIALOGUE #4:Q4, A4 | AWARENESS: 0.0, INTEREST: 0.2, DESIRE: <u>0.8</u>, PURCHASE: 0.0 |

**FIG. 8C**

| PROCESSING METHOD | PROCESSING RESULT (DROPOUT STAGE) |
|---|---|
| ESTIMATION LOGIC #1 OF DROPOUT STAGE | THE DIALOGUE STAGE FOR THE DIALOGUE #4 AT THE END OF THIS CONVERSATION, WHICH HAS BEEN ADDED THE STAGE LABEL "DESIRE" IS ESTIMATED TO BE THE DROPOUT STAGE. |

EP 4 787 221 A1

FIG. 9

EP 4 787 221 A1

```
2ND PROMPT

# INSTRUCTION
BASED ON FOLLOWING CONDITIONS AND DIALOGUE LOGS, PERFORM FUNNEL ANALYSIS TO
ESTIMATE CAUSE FOR DROPOUT REASON FROM CONVERSATION, AND PROVIDE IMPROVEMENT
PROPOSAL.
# DEFINITION OF FUNNEL ANALYSIS
HERE ARE FOLLOWING FOUR STAGES.
1. AWARENESS, 2. INTEREST, 3. DESIRE, 4. PURCHASE
RESPONSIBLE DEPARTMENTS DEPENDING ON THE FUNNEL ANALYSIS STAGE, THE FOLLOWING FIVE
DEPARTMENTS ARE RESPONSIBLE.
1. MARKETING DEPARTMENT, 2. SALES DEPARTMENT, 3. PRODUCT DEPARTMENT, 4. BUDGET
MANAGEMENT DEPARTMENT, 5. SUPPORT DEPARTMENT
# INPUT CONDITIONS
-CONDITION #1, CONDITION #2, CONDITION #3, CONDITION #4
# INPUT EXAMPLES
Q1, A1, STAGE LABEL
        :
Q4, A4, STAGE LABEL
DROPOUT STAGE LABEL
# PROCESSING
-PROCESSING #1, PROCESSING #2, PROCESSING #3
# OUTPUT FORMAT
-FORMAT #1, FORMAT #2, FORMAT #3, FORMAT #4
```

# FIG. 10

| 2ND INPUT EXAMPLE TO 1ST LLM |
| --- |
| DIALOGUE #1<br>QUESTION Q1: WHAT CAN A FEATURE X DO?<br>ANSWER A1: THE FEATURE X CAN DO···.<br>STAGE LABEL:  AWARENESS<br>DIALOGUE #2<br>QUESTION Q2: THERE ARE ISSUES WITH SETUP.<br>ANSWER A2: PLEASE REACH OUT.<br>STAGE LABEL:  INTEREST<br>DIALOGUE #3<br>QUESTION Q3:  ···<br>ANSWER A3:  ···<br>STAGE LABEL:  DESIRE<br>DIALOGUE #4<br>QUESTION Q4:  ···<br>ANSWER A4:  ···<br>STAGE LABEL:  DESIRE<br><br>DROPOUT STAGE LABEL:  DESIRE |

EP 4 787 221 A1

FIG. 11

| 2ND OUTPUT EXAMPLE FROM 1ST LLM |
|---|

THE FOLLOWING IS FUNNEL ANALYSIS RESULTS AND IMPROVEMENT PROPOSALS BASED ON PROVIDED INFORMATION.

SUMMARY OF DIALOGUE:

THE USER STRUGGLED WITH SETTING UP DURING THE REGISTRATION FOR THE TRIAL AND SOUGHT ADVICE FROM THE CHATBOT. HOWEVER, ···. AS A RESULT, THE USER ULTIMATELY DECIDED TO CONTACT THE SUPPORT TEAM.

ANALYSIS:

· DROPOUT STAGE LABEL: DESIRE           >DETAILED COMMENTS #1

ESTIMATION OF RESPONSIBLE DEPARTMENTS:

· SUPPORT DEPARTMENT (CUSTOMER SERVICE)     >DETAILED COMMENTS #2

ESTIMATION OF DROPOUT REASON

· TECHNICAL ISSUES RELATED TO SETUP       >DETAILED COMMENTS #3

IMPROVEMENT PROPOSAL:

· IMPROVE THE SETUP PROCESS            >DETAILED COMMENTS #4

CONCLUSION

BY ADDRESSING THE TECHNICAL PROBLEMS RELATED TO SETUP AND PROVIDING ROBUST SUPPORT THROUGH THE CUSTOMER SERVICE DEPARTMENT, WE CAN ENHANCE THE USER'S TRIAL EXPERIENCE AND REDUCE DROPOUT RATES AT THE DESIRE STAGE.

EP 4 787 221 A1

FIG. 12

(S3)

S4

ESTIMATE DIALOGUE STAGE
(1ST LLM)

S11

ESTIMATE DROPOUT STAGE
(ESTIMATION LOGIC #2)

S6

GENERATE IMPROVEMENT
PROPOSAL

(S7)

FIG. 13

WEIGHT

INPUT (NORMALIZED DIALOGUE NUMBER )

— — — — :LOGISTIC FUNCTION(k=1)

————————— :LOGISTIC FUNCTION(k=10)

- - - - - :LOGISTIC FUNCTION(k=100)

## FIG. 14A

| INPUT TO 1ST LLM (CONVERSATION) | OUTPUT FROM 1ST LLM(STAGE LABEL AND PROBABILITY) |
|---|---|
| DIALOGUE #1:Q1, A1 | AWARENESS: <u>0.7</u>, INTEREST: 0.3, DESIRE: 0.0, PURCHASE: 0.0 |
| DIALOGUE #2:Q2, A2 | AWARENESS: 0.2, INTEREST: <u>0.5</u>, DESIRE: 0.3, PURCHASE: 0.0 |
| DIALOGUE #3:Q3, A3 | AWARENESS: 0.1, INTEREST: 0.3, DESIRE: <u>0.6</u>, PURCHASE: 0.0 |
| DIALOGUE #4:Q4, A4 | AWARENESS: 0.0, INTEREST: 0.2, DESIRE: <u>0.8</u>, PURCHASE: 0.0 |

⇩ WEIGHTING

| WEIGHTED PROBABILITY(k=10) |
|---|
| AWARENESS: <u>0.053</u>, INTEREST: 0.023, DESIRE: 0.000, PURCHASE: 0.000 |
| AWARENESS: 0.100, INTEREST: <u>0.250</u>, DESIRE: 0.150, PURCHASE: 0.000 |
| AWARENESS: 0.092, INTEREST: 0.277, DESIRE: <u>0.554</u>, PURCHASE: 0.000 |
| AWARENESS: 0.000, INTEREST: 0.199, DESIRE: <u>0.795</u>, PURCHASE: 0.000 |

## FIG. 14B

| PROCESSING METHOD | PROCESSING RESULT (DROPOUT STAGE) |
|---|---|
| ESTIMATION LOGIC #2 OF DROPOUT STAGE | THE DIALOGUE STAGE "DESIRE" IS ESTIMATED TO BE THE DROPOUT STAGE WHERE THE TOTAL PROBABILITY IS MAXIMIZED. |

FIG. 15

FIG. 16

(S2)

S3

DIVIDE CONVERSATION LOG

S21

ESTIMATE DIALOGUE STAGE
(2ND LLM)

S5

ESTIMATE DROPOUT STAGE
(ESTIMATION LOGIC #1)

(S6)

FIG. 17A

TRAINING DATA

{ "TEXT" :" QUESTION: SETUP ISN'T GOING WELL. ANSWER: ¥" WE APOLOGIZE.
PLEASE CONTACTabc@pqr.com¥" " ," LABEL" :[ "INTEREST" ]}
{ "TEXT" :" QUESTION: HOW MUCH IS A FEATURE Z… ANSWER: ¥" AT PRESENT…
¥" " ," LABEL" :[ "INTEREST" ]}
{ "TEXT" :" QUESTION:… ANSWER: ¥" … ¥" " ," LABEL" :[ "INTEREST" ]}

FIG. 17B

INPUT EXAMPLE TO 2ND LLM

DIALOGUE #8
QUESTION Q8: HOW MUCH DOES A FEATURE Y COST?
ANSWER A8: WE DO NOT SUPPORT THE PAID FEATURE Y AT PRESENT.

FIG. 17C

OUTPUT EXAMPLE FROM 2ND LLM

BASED ON THE QUESTION Q8 AND THE ANSWER A8 FROM THE DIALOGUE #8, CLASSIFYING A COST
OF THE FEATURE Y INTO STAGES OF THE FUNNEL ANALYSIS YIELDS THE FOLLOWING STAGE
CLASSIFICATION.
>AWARENESS: 0.0, >INTEREST: 0.8, >DESIRE: 0.0, >PURCHASE: 0.9
THIS DIALOGUE #8 IS CONSIDERED TO FALL WITHIN THE 'INTEREST' OR "PURCHASE"
STAGE.

EP 4 787 221 A1

FIG. 18

Europäisches
Patentamt
European
Patent Office
Office européen
des brevets

# EUROPEAN SEARCH REPORT

**Application Number**

EP 25 22 4235

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/347058 A1 (ROSSI FRANCESCO [US] ET AL) 17 October 2024 (2024-10-17) * abstract; claims 1-20; figures 1-10 * * paragraphs [0005] - [0007], [0023] - [0103] * | 1-8 | INV. G06F40/20 G06F40/35 G06Q30/0201 G06Q30/02 G06Q30/0601 G06Q30/015 |
| X | WO 2024/167498 A1 (GOOGLE LLC [US]) 15 August 2024 (2024-08-15) * abstract; claims 1-21; figures 1-15 * * paragraphs [0003] - [0013], [0031] - [0120] * | 1-8 | |
| A,D | JP 2021 012303 A (TMJ CO LTD; EMPATH INC) 4 February 2021 (2021-02-04) * abstract; claims 1-14; figures 1-12 * * paragraphs [0006] - [0140] * | 1-8 | |

**TECHNICAL FIELDS SEARCHED (IPC)**

G06F
G06Q

The present search report has been drawn up for all claims

| Place of search | Date of completion of the search | Examiner |
|---|---|---|
| The Hague | 1 May 2026 | Streit, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 4235

This annex lists the patent family members relating to the patent documents cited in the above-mentioned European search report.
The members are as contained in the European Patent Office EDP file on
The European Patent Office is in no way liable for these particulars which are merely given for the purpose of information.

01-05-2026

| Patent document cited in search report | Publication date | Patent family member(s) | Publication date |
|---|---|---|---|
| US 2024347058 A1 | 17-10-2024 | US 2024347058 A1<br>WO 2024216213 A1 | 17-10-2024<br>17-10-2024 |
| WO 2024167498 A1 | 15-08-2024 | NONE | |
| JP 2021012303 A | 04-02-2021 | JP 6647722 B1<br>JP 2021012303 A | 14-02-2020<br>04-02-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021012303 A